# EUROPÄISCHE PATENTSCHRIFT

(11) **EP 4 008 951 B1**
(45) Veröffentlichungstag und Bekanntmachung des Hinweises auf die Patenterteilung: **05.03.2025**
(21) Anmeldenummer: 21212019.0
(22) Anmeldetag: 02.12.2021
(51) Int. Cl.: F21S 41/143, F21S 41/25, F21S 41/255, F21S 41/26, F21S 41/265, F21S 41/40, F21S 41/43, F21S 41/663, F21W 102/155

(54) **LICHTMODUL FÜR EINEN KRAFTFAHRZEUGSCHEINWERFER**
LIGHT MODULE FOR A MOTOR VEHICLE HEADLAMP
MODULE LUMINEUX POUR UN PHARE DE VÉHICULE AUTOMOBILE

(30) Priorität: 04.12.2020 DE 102020132350
(43) Veröffentlichungstag der Anmeldung: 08.06.2022
(73) Patentinhaber: Marelli Germany GmbH, 72762 Reutlingen (DE)
(72) Erfinder: Hoßfeld, Wolfgang, 72810 Gomaringen (DE)
(74) Vertreter: DREISS Patentanwälte PartG mbB

(56) Entgegenhaltungen:
- EP-A1- 3 299 698
- EP-A1- 3 608 585
- EP-A2- 2 306 074
- DE-A1- 102014 210 500
- KR-A- 20160 077 990
- US-A1- 2011 085 333
- US-A1- 2014 092 619

## Beschreibung

Die Erfindung betrifft ein Lichtmodul für einen Kraftfahrzeugscheinwerfer zum Erzeugen einer Gesamtlichtverteilung.

Ein Lichtmodul der eingangs genannten Art ist beispielsweise aus der DE 10 2018 222 333 A1 bekannt. Das Lichtmodul umfasst ein LED-Array und eine zweiteilige Linsenoptik. Das LED-Array bildet ein aktives Schwarz-Weiß-Display mit hoher Leuchtdichte. Jede LED entspricht einem Pixel des Displays und kann separat mit verschiedenen Helligkeitsstufen angesteuert werden. Durch die Vielzahl an Pixeln und die zweidimensionale Verteilung der Pixel, ist es möglich, eine Vielzahl an Lichtverteilungen zu generieren. Diese Lichtverteilungen werden durch zweiteilige Linsenoptik in die Umgebung projiziert. Das Lichtmodul kann in einen Scheinwerfer integriert werden, um dort alleine oder mit anderen Lichtmodulen zusammen Lichtverteilungen wie beispielsweise Abblendlicht, Fernlicht, Teil Fernsicht, Kurvenlicht zu erzeugen. Das beschriebene Lichtmodul hat den Nachteil, dass die erzeugte Abbildung eine hohe Farbigkeit aufweist. Dies liegt daran, dass durch den beschriebenen Aufbau der chromatische Fehler nicht korrigiert werden kann. Diese Problematik könnte durch Verwenden eines Achromats oder Apochromats gelöst werden. Dies führt jedoch zu höheren Kosten, einem höheren Gewicht, mehr benötigten Bauraum und in der Regel zu einer geringeren optischen Effizienz des Lichtmoduls, da die Verluste durch Fresnel-Reflexion und Materialabsorption steigen. Darüber hinaus reicht nach heutigem Stand der Technik ein solches Lichtmodul allein nicht aus, um in einem Scheinwerfer eine volle Fernlichtverteilung zu erzeugen.

Aus der US 2008/055896 ist ein Lichtmodul bekannt, mit dem eine Helligkeit und/oder eine Lichtfarbe eines dynamisch einstellbar sind. Dazu sollen Farben des Lichts, das von LEDs, Clustern oder Gruppen von LEDs emittiert wird, stufenlos oder schrittweise variiert werden, um praktisch jedes gewünschte Muster kollimierten Licht zu erzeugen. Die Korrektur eines chromatischen Fehlers wird nicht beschrieben. Weitere Lichtmodule sind aus EP 3608585 A1 und KR 20160077990 A bekannt.

Der vorliegenden Erfindung liegt die Aufgabe zugrunde, ein Lichtmodul bereitzustellen, mit dem die vorstehend beschriebenen Nachteile behoben werden können.

Diese Aufgabe wird mit einem Lichtmodul gemäß Anspruch 1 gelöst.

Erfindungsgemäß wird ausgehend von dem Lichtmodul der eingangs genannten Art vorgeschlagen, dass das Lichtmodul ein erstes Untermodul zum Erzeugen einer ersten Lichtverteilung und wenigstens ein weiteres, zweites Untermodul zum Erzeugen einer zweiten Lichtverteilung umfasst, wobei das erste und zweite Untermodul jeweils mindestens eine Halbleiterlichtquelle mit einer Licht emittierenden Fläche zum Abstrahlen von Licht und ein optisches System mit einer Primäroptik zum Bündeln zumindest eines Teils des abgestrahlten Lichts und einer Sekundäroptik zur Projektion zumindest eines Teils des gebündelten Lichts in eine Lichtaustrittsrichtung des Lichtmoduls umfassen, wobei die Gesamtlichtverteilung des Lichtmoduls die Überlagerung der ersten Lichtverteilung und der zweiten Lichtverteilung umfasst, und die Halbleiterlichtquelle des ersten Untermoduls in einem wellenlängenabhängigen Brennpunkt einer ersten Wellenlänge des optischen Systems des ersten Untermoduls und die Halbleiterlichtquelle des zweiten Untermoduls in einem wellenlängenabhängigen Brennpunkt einer zweiten Wellenlänge des optischen Systems des zweiten Untermoduls angeordnet ist, wobei die erste Wellenlänge von der zweiten Wellenlänge verschieden ist.

Erfindungsgemäß ist das erste Untermodul also auf eine erste Wellenlänge und das zweite Untermodul auf eine zweite Wellenlänge ausgelegt. Die Lichtverteilungen des ersten und des zweiten Untermoduls umfassen jeweils einen relativ großen Farbfehler, wobei unter Farbfehler hier insbesondere die Abweichung der Lichtfarbe von einem bestimmten Weißpunkt gemeint ist. Durch die Überlagerung der Lichtverteilungen des ersten und des zweiten Untermoduls heben sich die Farbfehler in der Gesamtlichtverteilung des Lichtmoduls auf.

Dadurch, dass das erste Untermodul auf die erste Wellenlänge ausgelegt ist, bildet das erste Untermodul Strahlen der ersten Wellenlänge scharf ab. Da das optische System weder einen Achromat noch einen Apochromat umfasst, ist die Abbildung von Strahlen anderer Wellenlängen, beispielsweise der zweiten Wellenlänge, nicht optimal. Die erste Lichtverteilung umfasst daher, insbesondere in Randbereichen, einen Farbfehler. Unter Farbfehler wird eine Abweichung in der Lichtfarbe von einem Weißpunkt verstanden. Beispielsweise umfasst die Lichtverteilung an einer Hell-Dunkel-Grenze, in dem Bereich der dunkel erscheinen soll, einen Farbsaum, der von Strahlen der zweiten Wellenlänge erzeugt wird. In dem Bereich der Hell-Dunkel-Grenze, der hell erscheinen soll, ist der Anteil von Strahlen der zweiten Wellenlänge wiederrum etwas zu gering, so dass hier verstärkt Strahlen der ersten Wellenlänge die Lichtfarbe bestimmen. Dieser Effekt ist auch als chromatisch Aberration bekannt. Die chromatische Aberration wird durch das erste optische System nicht korrigiert. Dafür wäre, wie bereits erwähnt, ein Achromat oder ein Apochromat nötig, mit der Folge, dass die Sekundäroptik durch einen Achromat oder einen Apochromat ersetzt werden müsste. Dies würde wiederum die Anzahl von Linsen des optischen Systems erhöhen. Dies wäre mit höheren Kosten, einem größeren benötigten Bauraum, einem größeren Gewicht und gegebenenfalls einer geringeren optischen Effizienz verbunden.

Dadurch, dass das zweite Untermodul auf die zweite Wellenlänge ausgelegt ist, bildet das zweite Untermodul Strahlen der zweiten Wellenlänge scharf ab. Da das optische System weder einen Achromat noch einen Apochromat umfasst, ist die Abbildung von Strahlen anderer Wellenlängen, beispielsweise der ersten Wellenlänge, nicht optimal. Die zweite Lichtverteilung umfasst daher, insbesondere in Randbereichen, einen Farbfehler. Beispielsweise umfasst die Lichtverteilung an einer Hell-Dunkel-Grenze, in dem Bereich der dunkel erscheinen soll, einen Farbsaum, der von Strahlen der ersten Wellenlänge erzeugt wird. In dem Bereich der Hell-Dunkel-Grenze, der hell erscheinen soll, ist der Anteil von Strahlen der ersten Wellenlänge wiederrum etwas zu gering, so dass hier verstärkt Strahlen der zweiten Wellenlänge die Lichtfarbe bestimmen.

Die Farbfehler der ersten Lichtverteilung des ersten Untermoduls und der zweiten Lichtverteilung des zweiten Untermoduls werden durch Überlagerung der beiden Lichtverteilungen korrigiert.

Durch geeignete Auslegung des ersten und des zweiten Untermoduls kann somit die Farbigkeit der Gesamtlichtverteilung deutlich verringert werden.

Die mit dem Lichtmodul erzeugbare Gesamtlichtverteilung umfasst keinen harten Weiß-Kontrast an der Hell-Dunkel-Grenze. Ein harter Weiß-Kontrast ist üblicherweise bei Kraftfahrzeugscheinwerfern nicht erwünscht. Häufig wird sogar zusätzlicher Aufwand betrieben, um den Kontrast an Hell-Dunkel-Grenze, beispielsweise über sogenannte Mikrostrukturierung von Linsenflächen oder Frostung, zu verringern. Bei dem erfindungsgemäßen Lichtmodul sind derartige Maßnahmen nicht notwendig.

Insgesamt kann also durch geeignete Auslegung der Untermodule des Lichtmoduls eine ausreichend farbneutrale Gesamtlichtverteilung erzeugt und gleichzeitig ein harter Weiß-Kontrast an der Hell-Dunkel-Grenze vermieden werden. Dabei kann auf Achromaten bzw. Apochromaten und zusätzliche Mikrostrukturierung oder Frostung Der Linsenflächen verzichtet werden. Vorteilhafterweise werden so Kosten, Gewicht und Bauraum minimiert. Gleichzeitig kann vorteilhaft bei geeigneter Materialwahl und Auslegung die optische Effizienz erhöht werden, dass sich durch eine geringere erforderliche Anzahl an Linsen bzw. Linsenflächen die Absorption verringert und es weniger Verluste durch Fresnel-Reflexion auftreten.

Gemäß einer bevorzugten Ausführungsform ist vorgesehen, dass die erste Lichtverteilung des ersten Untermoduls und die zweite Lichtverteilung des zweiten Untermoduls sich wenigstens teilweise, insbesondere größtenteils, überlagern. Es kann sich auch als vorteilhaft erweisen, wenn die Ausleuchtbereiche des ersten und des zweiten Untermoduls identisch sind, so dass sich die wenigstens erste und zweite Lichtverteilung vollständig überlappen.

Gemäß einer bevorzugten Ausführungsform ist vorgesehen, dass die Halbleiterlichtquelle des ersten Untermoduls und/oder die Halbleiterlichtquelle des zweiten Untermoduls wenigstes eine, insbesondere mehrere, Leuchtdioden, LEDs, umfasst. Die LEDs können matrixartig über- und/oder nebeneinander angeordnet sein, so dass sie ein LED-Array bilden. Die LEDs der Halbleiterlichtquellen können vorteilhafterweise einzeln, gruppenweise oder alle gemeinsam angesteuert werden.

Gemäß einer weiteren bevorzugten Ausführungsform ist vorgesehen, dass eine numerische Apertur des optischen Systems des ersten und/oder des zweiten Untermoduls wenigstens 0.5, insbesondere wenigstens 0.65, beträgt.

Vorteilhafterweise kann vorgesehen sein, dass die Sekundäroptik des ersten Untermoduls und die Sekundäroptik des zweiten Untermoduls einteilig ausgebildet ist. Dadurch wird die Anzahl der Bauteile und damit die einzuhaltenden Toleranzen bei der Positionierung der Bauteile sowie Kosten reduziert. Ferner kann sich die insbesondere einteilige, zylindrische Form der Lichtaustrittsfläche vorteilhaft auf ein ästhetisches Erscheinungsbild des Lichtmoduls auswirken.

Vorteilhafterweise kann vorgesehen sein, dass die Sekundäroptik des ersten Untermoduls und/oder die Sekundäroptik des zweiten Untermoduls als anamorphotische Linse ausgebildet ist.

In Weiterbildung dieses Erfindungsgedankens kann es sich als vorteilhaft erweisen, wenn wenigstens eine Lichteintrittsfläche der anamorphotischen Linse als zylindrischer Flächenabschnitt mit einer horizontalen Rotationsachse und wenigstens eine Lichtaustrittsfläche der anamorphotischen Linse als zylindrischer Flächenabschnitt mit einer vertikalen Rotationsachse ausgebildet ist.

Vorteilhafterweise kann vorgesehen sein, dass das erste Untermodul und/oder das zweite Untermodul eine Blende umfasst.

Es kann sich als vorteilhaft erweisen, dass die Blende des ersten Untermoduls und des zweiten Untermoduls einteilig ausgebildet ist.

Gemäß einer weiteren bevorzugten Ausführungsform ist vorgesehen, dass das Lichtmodul ein drittes Untermodul zum Erzeugen einer dritten Lichtverteilung mit mindestens einer Halbleiterlichtquelle mit einer Licht emittierenden Fläche zum Abstrahlen von Licht und ein optisches System mit einer Primäroptik zum Bündeln zumindest eines Teils des abgestrahlten Lichts und einer Sekundäroptik zur Projektion zumindest eines Teils des gebündelten Lichts in eine Lichtaustrittsrichtung des Lichtmoduls, wobei die Gesamtlichtverteilung des Lichtmoduls die Überlagerung der dritten Lichtverteilung umfasst, wobei das dritte Untermodul in einem wellenlängenabhängigen Brennpunkt einer dritten Wellenlänge des optischen Systems des dritten Untermoduls angeordnet ist, wobei die dritte Wellenlänger von der ersten und der zweiten Wellenlänge verschieden ist.

Die mit Bezugnahme auf das erste und/oder zweite Untermodul beschriebenen Gestaltungsmöglichkeiten lassen sich auch auf das dritte Untermodul anwenden. Ferner kann das Lichtmodul noch zusätzliche weitere Untermodule, die insbesondere auf weitere Wellenlängen ausgelegt sind, umfassen.

Vorteilhafterweise kann vorgesehen sein, dass die erste Wellenlänge ca. 500 nm und/oder die zweite Wellenlänge ca. 570 nm und/oder die dritte Wellenlänge ca. 470 nm beträgt

Eine weitere Ausführungsform umfasst einen Kraftfahrzeugscheinwerfer umfassend wenigstens ein Lichtmodul wobei das Lichtmodul gemäß den vorstehend beschriebenen Ausführungsformen ausgebildet ist.

Vorteilhafte Weiterbildungen und weitere bevorzugte Ausführungsbeispiele der vorliegenden Erfindung können den Unteransprüchen sowie der nachfolgenden Figurenbeschreibung und den dazugehörigen Figuren entnommen werden. Es zeigen
- Fig. 1: ein erfindungsgemäßes Lichtmodul gemäß einer ersten Ausführungsform in einer perspektivischen Ansicht;
- Fig. 2: das Lichtmodul aus Figur 1 in einer Draufsicht von oben;
- Fig. 3a und 3b: jeweils ein Spot-Diagramm für ein erstes und ein zweites optisches System des Lichtmoduls aus den Figuren 1 und 2;
- Fig. 4: ein erfindungsgemäßes Lichtmodul gemäß einer zweiten Ausführungsform in einer perspektivischen Ansicht;
- Fig. 5: das Lichtmodul aus Fig. 4 in einer Draufsicht von oben;
- Fig. 6: das Lichtmodul aus Figuren 4 und Fig. 5 in einer Ansicht von der Seite;
- Fig. 7a und 7b: verschiedene Ausführungsformen einer Sekundäroptik des Lichtmoduls aus den Figuren 4, 5 und 6, und
- Fig. 8: einen Kraftfahrzeugscheinwerfer mit einem erfindungsgemäßen Lichtmodul.

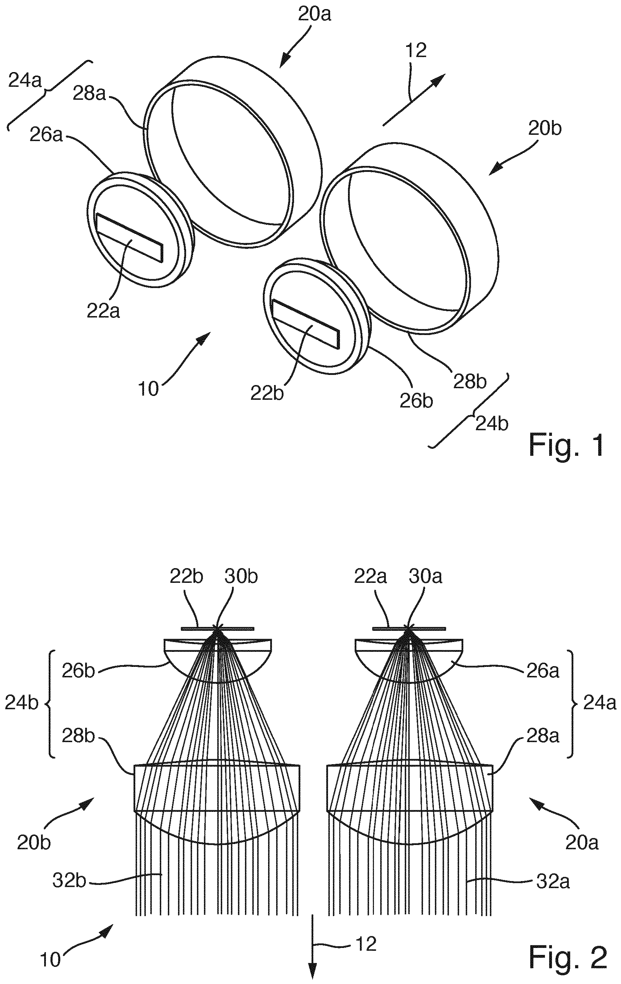

Die Figuren 1 und 2 zeigen ein Lichtmodul, das in seiner Gesamtheit mit dem Bezugszeichen 10 gekennzeichnet ist. Das Lichtmodul 10 wird in einem Kraftfahrzeugscheinwerfer zum Erzeugen einer vorgebbaren Gesamtlichtverteilung in Lichtaustrittsrichtung auf eine Fahrbahn vor dem Fahrzeug verwendet.

Das Lichtmodul umfasst ein erste Untermodul 20a und ein zweites Untermodul 20b. Das erste Untermodul 20a umfasst eine Halbleiterlichtquelle 22a. Das zweite Untermodul 20b umfasst eine Halbleiterlichtquelle 22b. Gemäß der dargestellten Ausführungsform umfassen die Halbleiterlichtquellen 22a, 22b mehrere Leuchtdioden, LEDS. Die LEDs können matrixartig über- und/oder nebeneinander angeordnet sein, so dass sie ein LED-Array bilden. Die LEDs der Halbleiterlichtquellen 22a, 22b können vorteilhafterweise einzeln, gruppenweise oder alle gemeinsam angesteuert werden.

Weiter umfassen das erste Untermodul 20a und das zweite Untermodul 20b jeweils ein optisches System 24a, 24b mit jeweils einer Primäroptik 26a, 26b zum Bündeln zumindest eines Teils des von den Halbleiterlichtquellen 22a, 22b abgestrahlten Lichts und jeweils einer Sekundäroptik 28a, 28b zur Projektion zumindest eines Teils des gebündelten Lichts als erste und zweite Lichtverteilung in die Lichtaustrittsrichtung 12 des Lichtmoduls 10.

Die Halbleiterlichtquelle 22a des ersten Untermoduls ist in einem wellenlängenabhängigen Brennpunkt 30a einer ersten Wellenlänge des optischen Systems 24a des ersten Untermoduls 20a und die Halbleiterlichtquelle 22b des zweiten Untermoduls 20b ist in einem wellenlängenabhängigen Brennpunkt 30b einer zweiten Wellenlänge des optischen Systems 24b des zweiten Untermoduls 20b angeordnet. Die erste Wellenlänge und die zweite Wellenlänge unterscheiden sich voneinander.

Durch Anordnen der Halbleiterlichtquelle 22a in dem Brennpunkt 30a des optischen Systems 24a der ersten Wellenlänge und durch Anordnen der Halbleiterlichtquelle 22b in dem Brennpunkt 30b des optischen Systems 24b der zweiten Wellenlänge ist das erste Untermodul 20a auf die erste Wellenlänge und das zweite Untermodul auf die zweite Wellenlänge ausgelegt. Unter Auslegung wird hierbei verstanden, dass das optische System 24a des ersten Untermoduls 20a die Halbleiterlichtquelle 22a für die erste Wellenlänge und das optische System 24b des zweiten Untermoduls 20b die Halbleiterlichtquelle 22b für die zweite Wellenlänge möglichst scharf abbildet.

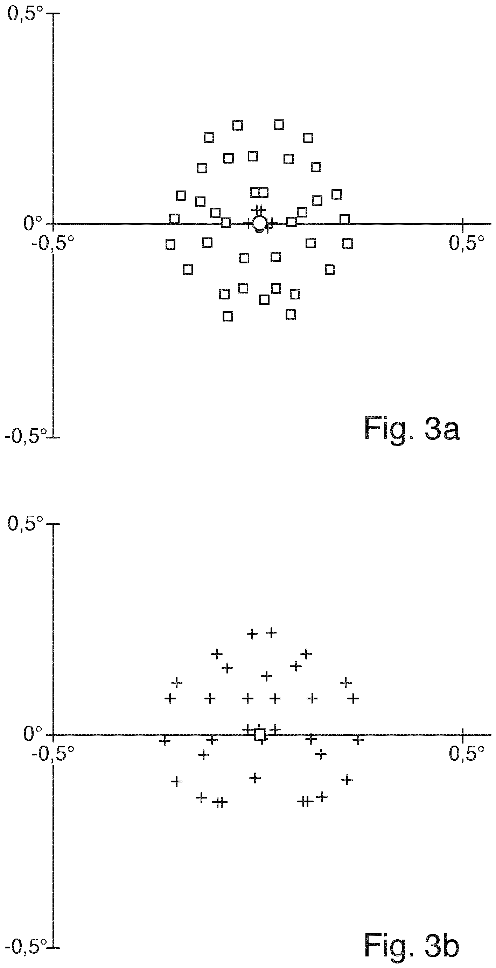

Die Figuren 3a und 3b zeigen jeweils ein sogenanntes Spot-Diagramm des ersten und des zweiten Untermoduls 20a, 20b für einen zentralen Objektpunkt, d.h. für einen Punkt, der auf einem Schnittpunkt einer Ebene der jeweiligen Halbleiterlichtquelle 22a, 22b und einer optischen Achse des jeweiligen optischen Systems 24a, 24b liegt. In dem Spot-Diagramm sind die Auftreffpunkte, die von dem zentralen Objektpunkt ausgehen, in der Bildebene dargestellt.

In Figur 3a ist das Spot-Diagramm des ersten Untermoduls 20a dargestellt. In einem Bereich im Zentrum des Diagramms treffen Strahlen der ersten Wellenlänge auf, während Strahlen der zweiten Wellenlänge verstreut um den Bereich im Zentrum, etwa in einem Radius von ungefähr 0.2 Grad, auftreffen. Die Auftreffpunkte der Strahlen der ersten Wellenlänge sind durch ein Kreuz gekennzeichnet. Die Auftreffpunkte der Strahlen der zweiten Wellenlänge sind durch ein Viereck gekennzeichnet. Dadurch, dass das erste Untermodul 20a auf die erste Wellenlänge ausgelegt ist, wird der Radius des Bereichs im Zentrum in dem die Strahlen der ersten Wellenlänge auftreffen minimal. Da das optische System 24a weder ein Achromat noch ein Apochromat umfasst, ist die Abbildung von Strahlen anderer Wellenlängen, beispielsweise der zweiten Wellenlänge, nicht optimal. Mit dem ersten Untermodul 20a erzeugbare Lichtverteilungen umfassen daher, insbesondere in Randbereichen der Lichtverteilungen, einen Farbfehler. Unter Farbfehler wird eine Abweichung in der Lichtfarbe von einem Weißpunkt verstanden. Beispielsweise umfasst eine Lichtverteilung an einer Hell-Dunkel-Grenze, in dem Bereich der dunkel erscheinen soll, einen Farbsaum, der von Strahlen der zweiten Wellenlänge erzeugt wird. In dem Bereich der Hell-Dunkel-Grenze, der hell erscheinen soll, ist der Anteil von Strahlen der zweiten Wellenlänge wiederrum etwas zu gering, so dass hier verstärkt Strahlen der ersten Wellenlänge die Lichtfarbe bestimmen. Dieser Effekt ist auch unter der Bezeichnung chromatische Aberration bekannt. Die chromatische Aberration wird durch das erste optische System 24a nicht korrigiert. Dafür wäre beispielsweise, wie bereits erwähnt, ein Achromat oder ein Apochromat notwendig. Dies würde wiederum die Anzahl der Bauteile, insbesondere Linsen, des optischen Systems 24a erhöhen, und hätte somit höhere Kosten, einen größeren benötigten Bauraum, ein größeres Gewicht und gegebenenfalls eine geringere optische Effizienz zur Folge.

In Figur 3b ist das Spot-Diagramm des zweiten Untermoduls 20b dargestellt. In einem Bereich im Zentrum des Diagramms treffen Strahlen der zweiten Wellenlänge auf, während Strahlen der ersten Wellenlänge verstreut an verschiedenen Punkten um den Bereich im Zentrum, etwa in einem Radius von ungefähr 0.2 Grad, auftreffen. Die Auftreffpunkte der Strahlen der ersten Wellenlänge sind durch ein Kreuz gekennzeichnet. Die Auftreffpunkte der Strahlen der zweiten Wellenlänge sind durch ein Viereck gekennzeichnet. Dadurch, dass das zweite Untermodul 20b auf die zweite Wellenlänge ausgelegt ist, wird der Radius des Bereichs im Zentrum in dem die Strahlen der zweiten Wellenlänge auftreffen minimal. Da das optische System 24b ebenfalls keinen Achromat oder Apochromat umfasst, ist die Abbildung von Strahlen anderer Wellenlängen, beispielsweise der ersten Wellenlänge, nicht optimal. Mit dem zweiten Untermodul 20b erzeugbare Lichtverteilungen umfassen daher, insbesondere in Randbereichen der Lichtverteilungen, einen Farbfehler. Beispielsweise umfasst eine Lichtverteilung an einer Hell-Dunkel-Grenze, in dem Bereich der dunkel erscheinen soll, einen Farbsaum, der von Strahlen der ersten Wellenlänge erzeugt wird. In dem Bereich der Hell-Dunkel-Grenze, der hell erscheinen soll, ist der Anteil von Strahlen der ersten Wellenlänge wiederrum etwas zu gering, so dass hier verstärkt Strahlen der zweiten Wellenlänge die Lichtfarbe bestimmen. Die chromatische Aberration wird auch durch das zweite optische System 24b nicht korrigiert.

Die Farbfehler der ersten Lichtverteilung des ersten Untermoduls 20a und der zweiten Lichtverteilung des zweiten Untermoduls 20b können durch Überlagerung der beiden Lichtverteilungen korrigiert werden. Vorteilhafterweise überlagern sich die erste Lichtverteilung des ersten Untermoduls 20a und die zweite Lichtverteilung des zweiten Untermoduls 20b wenigstens teilweise, insbesondere größtenteils. Es kann sich auch als vorteilhaft erweisen, wenn die Ausleuchtbereiche des ersten und des zweiten Untermoduls 20a, 20b identisch sind, so dass sich die wenigstens erste und zweite Lichtverteilung vollständig überlappen.

Die erste Wellenlänge beträgt beispielsweise 500 nm und die zweite Wellenlänge beträgt beispielsweise 570 nm. In diesem Fall umfasst die erste Lichtverteilung an der Hell-Dunkel-Grenze, in dem Bereich der dunkel erscheinen soll, einen blauen Farbsaum, und in dem Bereich an der Hell-Dunkel-Grenze, der hell erscheinen soll, eine warm-weiße bis gelbe Lichtfarbe. Die zweite Lichtverteilung umfasst an der Hell-Dunkel-Grenze, in dem Bereich der dunkel erscheinen soll, einen gelben Farbsaum, und in dem Bereich an der Hell-Dunkel-Grenze, der hell erscheinen soll, eine kalt-weiße bis blaue Lichtfarbe. Durch Überlagerung der beiden Lichtverteilungen überlagern sich an der Hell-Dunkel-Grenze, in dem Bereich der dunkel erscheinen soll, der gelbe und der blaue Farbsaum, und in dem Bereich der hell erscheinen soll, die kalt-weiße bis blaue Lichtfarbe und die warm-weiße bis gelbe Lichtfarbe, sodass die Gesamtlichtverteilung eine weiße Lichtfarbe umfasst.

Durch geeignete Auslegung des ersten und des zweiten Untermoduls 20a, 20b kann somit die Farbigkeit der Gesamtlichtverteilung des Lichtmoduls 10 deutlich verringert werden.

Die mit dem Lichtmodul 10 erzeugbare Gesamtlichtverteilung umfasst keinen harten Weiß-Kontrast an der Hell-Dunkel-Grenze. Ein harter Weiß-Kontrast ist üblicherweise bei Kraftfahrzeugscheinwerfern nicht erwünscht. Häufig wird sogar zusätzlicher Aufwand betrieben, um den Kontrast an Hell-Dunkel-Grenze, beispielsweise über sogenannte Mikrostrukturierung von Linsenflächen oder Frostung, zu verringern. Bei dem erfindungsgemäßen Lichtmodul 10 sind derartige Maßnahmen nicht notwendig.

Insgesamt kann also durch geeignete Auslegung der Untermodule 20a, 20b des Lichtmoduls 10 eine ausreichend farbneutrale Gesamtlichtverteilung erzeugt und gleichzeitig ein harter Weiß-Kontrast an der Hell-Dunkel-Grenze vermieden werden. Dabei kann auf Achromaten bzw. Apochromaten und zusätzliche Mikrostrukturierung oder Frostung der Linsenflächen verzichtet werden. Vorteilhafterweise werden so Kosten, Gewicht und Bauraum minimiert. Gleichzeitig kann vorteilhaft bei geeigneter Materialwahl und Auslegung die optische Effizienz erhöht werden, da sich durch eine geringere erforderliche Anzahl an Linsen bzw. Linsenflächen die Absorption verringert und so weniger Verluste durch Fresnel-Reflexion auftreten.

In Figur 2 sind zusätzlich Strahlengänge 32a, 32b des ersten und zweiten Untermoduls 20a, 20b für die jeweilige Wellenlänge auf die die Untermodule 20a, 20b ausgelegt sind, dargestellt. Die Strahlengänge 32a, 32b gehen jeweils von einem jeweiligen, im Brennpunkt 30a, 30b liegenden Zentrum der jeweiligen Halbleiterlichtquelle 22a, 22b aus und werden von den optischen Systemen 24a, 24b eingefangen und abgebildet.

Die nebeneinander angeordnete Darstellung der Strahlengänge ist dabei lediglich beispielhaft. Vorteilhafterweise überlagern sich die Strahlengänge 32a, 32b zu einer Gesamtlichtverteilung des Lichtmoduls 10.

Die von den Halbleiterlichtquellen 22a, 22b ausgehenden Strahlen weisen eine hohe Divergenz auf. Typischerweise strahlen die Halbleiterlichtquelle 22a, 22b jeweils in den gesamten Halbraum ab. Je mehr dieser Strahlen von den optischen Systemen 24a, 24b eingefangen und abgebildet werden, desto größer ist eine sogenannte numerische Apparatur der optischen Systeme 24a, 24b. Die numerische Apparatur ist proportional zum Sinus des Öffnungswinkels. Handelt es sich bei den Halbleiterlichtquellen 22a, 22b um Lambert-Strahler, so ist die optische Effizienz des optischen Systeme 24a, 24b wiederum proportional zum Quadrat der numerischen Apertur. Folglich ist die Effizienz proportional zum Quadrat des Sinus des Öffnungswinkels. Folglich ist es für eine Effizienz des beschriebenen Lichtmoduls 10 sehr vorteilhaft, wenn die numerische Apertur der optischen Systeme 24a, 24b möglichst hoch ist. Vorteilhafterweise beträgt die numerische Apertur der optischen Systeme 24a, 24b mindestens 0.5, insbesondere 0.65.

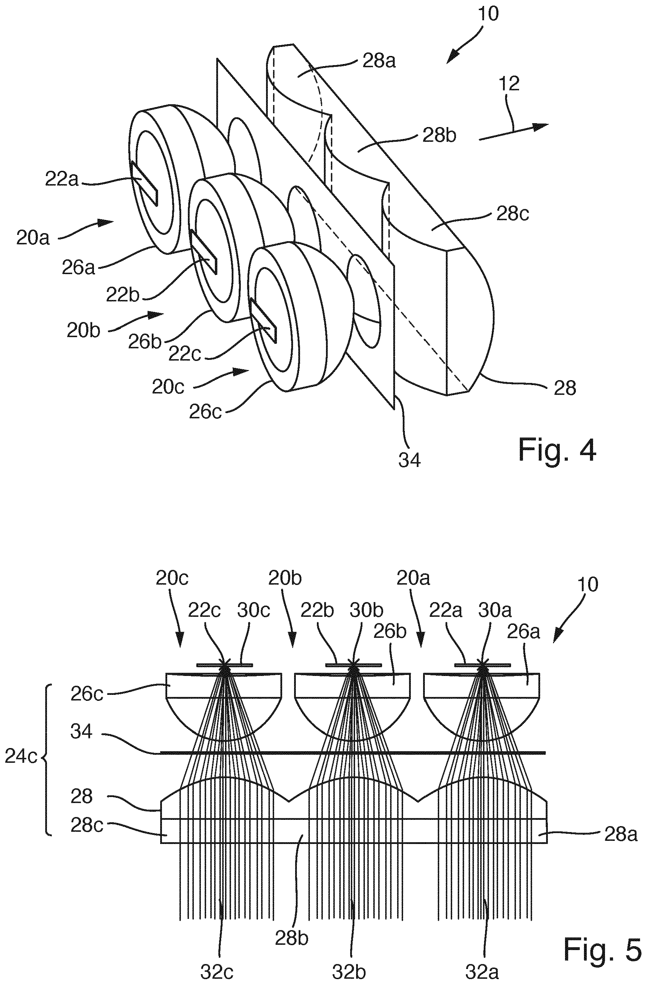

Figuren 4, 5 und 6 zeigen verschiedene Darstellungen einer weiteren Ausführungsform eines Lichtmoduls 10.

Gemäß der dargestellten Ausführungsform umfasst das Lichtmodul 10 ein weiteres Untermodul 20c. Das Untermodul 20c ist prinzipiell analog zu den bereits beschriebenen

Untermodulen 20a, 20b aufgebaut und dabei vorteilhafterweise auf eine dritte Wellenlänge ausgelegt. Die dritte Wellenlänge unterscheidet sich dabei von der ersten und der zweiten Wellenlänge.

Ferner umfasst das Lichtmodul in den Figuren 4, 5 und 6 eine Blende 34. Gemäß der dargestellten Ausführungsform ist die Blende 34 einteilig für die drei Untermodule 20a, 20b, 20c ausgebildet. Alternativ ist aber auch denkbar, dass jedes Untermodul 20a, 20b, 20c eine separate Blende umfasst.

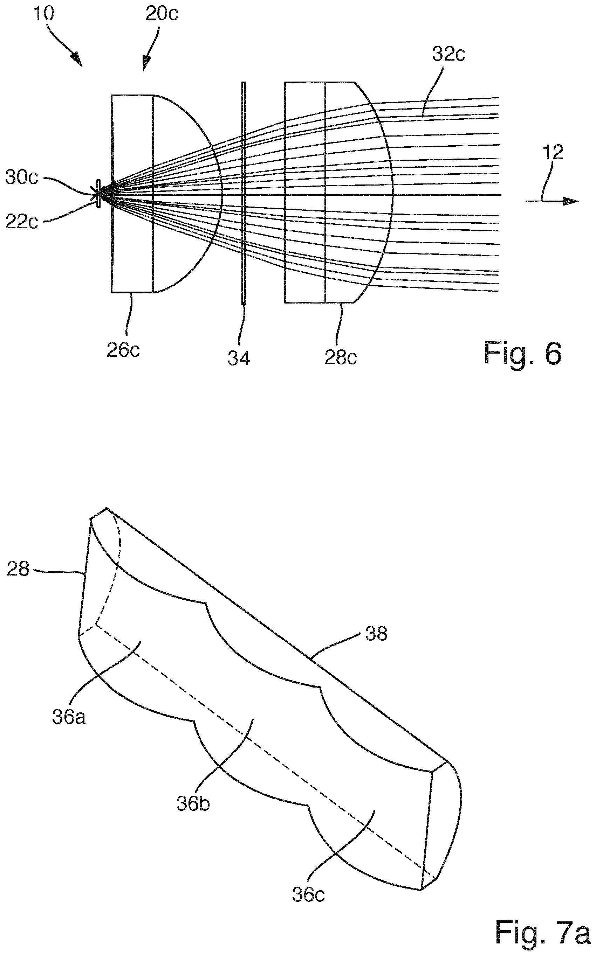

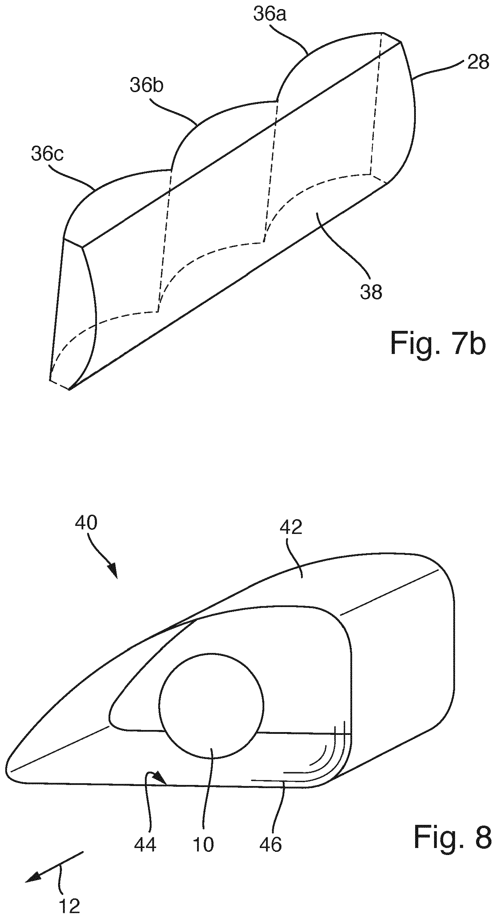

Gemäß der in den Figuren 4, 5 und 6 dargestellten Ausführungsform sind die Sekundäroptiken 28a, 28b, 28c der optischen Systeme 24a, 24b, 24c der Untermodule 20a, 20b, 20c als eine einteilige Sekundäroptik 28 ausgebildet. Die einteilige Sekundäroptik 28 ist ferner als anamorphotische Linse ausgebildet. Dies ist in Figuren 7a und 7b dargestellt.

Figur 7a zeigt die anamorphotische Linse 28 von der Lichteintrittsseite und Figur 7b von der Lichtaustrittsseite aus. Gemäß der dargestellten Ausführungsform umfassen Lichteintrittsflächen 36a, 36b, 36c jeweils einen zylindrischen Flächenabschnitt mit einer vertikalen Rotationsachse. Die Lichtaustrittsfläche 38 umfasst einen zylindrischen Flächenabschnitt mit einer horizontalen, insbesondere senkrecht zu der Lichtaustrittsrichtung 12 ausgerichteten, Rotationsachse.

Die Lichteintrittsflächen 36a, 36b, 36c sind so ausgelegt, dass eintretende Lichtstrahlen in der horizontalen Ebene gebündelt werden, vgl. Fig. 5. Die Lichtaustrittsfläche 38 ist vorteilhafterweise so ausgelegt, dass austretende Lichtstrahlen in der vertikalen Ebene gebündelt werden, vgl. Fig. 6.

Durch die einteilige Sekundäroptik 28 wird der Anzahl der benötigten Bauteile und damit die einzuhaltenden Toleranzen bzgl. Positionierung sowie Kosten reduziert. Ferner kann sich die insbesondere einteilige, zylindrische Form der Lichtaustrittsfläche 38 vorteilhaft auf das ästhetische Erscheinungsbild des Lichtmoduls 10 auswirken. Schließlich zeigt Figur 8 einen Kraftfahrzeugscheinwerfer 40. Der Scheinwerfer 40 umfasst ein Gehäuse 42, das beispielsweise aus Kunststoff gefertigt ist. Das Gehäuse 42 weist in Lichtaustrittsrichtung 12 eine Lichtaustrittsöffnung 44 auf, die durch eine transparente Abdeckscheibe 46 verschlossen ist. Im Inneren des Gehäuses 42 ist ein erfindungsgemäßes Lichtmodul 10 angeordnet. Das Lichtmodul 10 dient zur Erzeugung einer beliebigen resultierenden Fahrt-Lichtverteilung des Kraftfahrzeugscheinwerfers oder eines Teils davon, bspw. eines Abblendlichts, Fernlichts, adaptiven Fahrtlichts (Stadtlicht, Landstraßenlicht, Autobahnlicht, Teilfernlicht, Markierungslicht), Nebellichts oder ähnliches.

Zusammen mit dem Lichtmodul 10 können in dem Gehäuse 42 auch noch andere Lichtmodule zur Erzeugung einer beliebigen Fahrt-Lichtverteilung oder eines Teils davon, oder Leuchtenmodule zur Realisierung einer beliebigen Leuchtenfunktion (z.B. Blinklicht, Positionslicht, Standlicht, Tagfahrlicht, Standlicht, Rückfahrlicht, Bremslicht oder ähnliches) angeordnet sein.

## Patentansprüche

1. Lichtmodul (10) für einen Kraftfahrzeugscheinwerfer (40) zum Erzeugen einer Gesamtlichtverteilung, wobei das Lichtmodul (10) ein erstes Untermodul (20a) zum Erzeugen einer ersten Lichtverteilung und wenigstens ein weiteres, zweites Untermodul (20b) zum Erzeugen einer zweiten Lichtverteilung umfasst, wobei das erste und das zweite Untermodul (20a, 20b) jeweils mindestens eine Halbleiterlichtquelle (22a, 22b) mit einer Licht emittierenden Fläche zum Abstrahlen von Licht und ein optisches System (24a, 24b) mit einer Primäroptik (26a, 26b) zum Bündeln zumindest eines Teils des abgestrahlten Lichts und einer Sekundäroptik (28, 28a, 28b) zur Projektion zumindest eines Teils des gebündelten Lichts in eine Lichtaustrittsrichtung (12) des Lichtmoduls (10) umfassen, wobei die Gesamtlichtverteilung des Lichtmoduls (10) die Überlagerung der ersten Lichtverteilung und der zweiten Lichtverteilung umfasst, und die Halbleiterlichtquelle (22a) des ersten Untermoduls (20a) in einem wellenlängenabhängigen Brennpunkt (30a) einer ersten Wellenlänge des optischen Systems (24a) des ersten Untermoduls (20a), so dass das erste Untermodul (20a) auf die erste Wellenlänge ausgelegt ist und Strahlen der ersten Wellenlänge scharf abbildet, und die Halbleiterlichtquelle (22b) des zweiten Untermoduls (20b) in einem wellenlängenabhängigen Brennpunkt (30b) einer zweiten Wellenlänge des optischen Systems (24b) des zweiten Untermoduls (20b) angeordnet ist, so dass das zweite Untermodul (20b) auf die zweite Wellenlänge ausgelegt ist und Strahlen der zweiten Wellenlänge scharf abbildet, wobei die erste Wellenlänge von der zweiten Wellenlänge verschieden ist, **dadurch gekennzeichnet, dass** ein durch Strahlen der zweiten Wellenlänge hervorgerufener Farbfehler in der ersten Lichtverteilung des ersten Untermoduls (20a) und ein durch Strahlen der ersten Wellenlänge hervorgerufener Farbfehler in der zweiten Lichtverteilung durch die Überlagerung der ersten und der zweiten Lichtverteilung in der Gesamtlichtverteilung des Lichtmoduls aufgehoben wird.

2. Lichtmodul (10) nach Anspruch 1, **dadurch gekennzeichnet, dass** die erste Lichtverteilung des ersten Untermoduls (20a) und die zweite Lichtverteilung des zweiten Untermoduls (20b) sich wenigstens teilweise, insbesondere größtenteils, überlagern.

3. Lichtmodul (10) nach einem der vorhergehenden Ansprüche, **dadurch gekennzeichnet, dass** die Halbleiterlichtquelle (22a) des ersten Untermoduls (20a) und/oder die Halbleiterlichtquelle (22b) des zweiten Untermoduls (20b) wenigstes eine, insbesondere mehrere, Leuchtdioden umfasst.

4. Lichtmodul (10) nach einem der vorhergehenden Ansprüche, **dadurch gekennzeichnet, dass** eine numerische Apertur des optischen Systems (24a, 24b) des ersten und/oder des zweiten Untermoduls (20a, 20b) wenigstens 0.5, insbesondere wenigstens 0.65, beträgt.

5. Lichtmodul (10) nach einem der vorhergehenden Ansprüche, **dadurch gekennzeichnet, dass** die Sekundäroptik (28, 28a) des ersten Untermoduls (20a) und die Sekundäroptik (28, 28b) des zweiten Untermoduls (20b) einteilig ausgebildet ist.

6. Lichtmodul (10) nach einem der vorhergehenden Ansprüche, **dadurch gekennzeichnet, dass** die Sekundäroptik (28, 28a) des ersten Untermoduls (20a) und/oder die Sekundäroptik (28, 28b) des zweiten Untermoduls (20b) als anamorphotische Linse (28) ausgebildet ist.

7. Lichtmodul (10) nach Anspruch 6, **dadurch gekennzeichnet, dass** wenigstens eine Lichteintrittsfläche (36a, 36b, 36c) der anamorphotischen Linse (28) als zylindrischer Flächenabschnitt mit einer horizontalen Rotationsachse und wenigstens eine Lichtaustrittsfläche (38) der anamorphotischen Linse (28) als zylindrischer Flächenabschnitt mit einer vertikalen Rotationsachse ausgebildet ist.

8. Lichtmodul (10) nach einem der vorhergehenden Ansprüche, **dadurch gekennzeichnet, dass** das erste Untermodul (20a) und/oder das zweite Untermodul (20b) eine Blende (34) umfasst.

9. Lichtmodul (10) nach Anspruch 8, **dadurch gekennzeichnet, dass** die Blende (23) des ersten Untermoduls (20a) und des zweiten Untermoduls (20b) einteilig ausgebildet ist.

10. Lichtmodul (10) nach einem der vorhergehenden Ansprüche, **dadurch gekennzeichnet, dass** das Lichtmodul (10) ein drittes Untermodul (20c) zum Erzeugen einer dritten Lichtverteilung mit mindestens einer Halbleiterlichtquelle (22c) mit einer Licht emittierenden Fläche zum Abstrahlen von Licht und einem optische System (24c) mit einer Primäroptik (26c) zum Bündeln zumindest eines Teils des abgestrahlten Lichts und einer Sekundäroptik (28c) zur Projektion zumindest eines Teils des gebündelten Lichts in eine Lichtaustrittsrichtung (12) des Lichtmoduls (10), wobei die Gesamtlichtverteilung des Lichtmoduls (10) eine Überlagerung der dritten Lichtverteilung umfasst, wobei die Halbleiterlichtquelle (22c) in einem wellenlängenabhängigen Brennpunkt (30c) einer dritten Wellenlänge des optischen Systems (24c) des dritten Untermoduls (20c) angeordnet ist, wobei die dritte Wellenlänger von der ersten und/oder der zweiten Wellenlänge verschieden ist.

11. Lichtmodul (10) nach einem der vorhergehenden Ansprüche, **dadurch gekennzeichnet, dass** die erste Wellenlänge ca. 500 nm und/oder die zweite Wellenlänge ca. 570 nm und/oder die dritte Wellenlänge ca. 470 nm beträgt.

12. Kraftfahrzeugscheinwerfer (40) umfassend wenigstens ein Lichtmodul (10), **dadurch gekennzeichnet, dass** das Lichtmodul (10) nach wenigstens einem der Ansprüche 1 bis 11 ausgebildet ist .

## Claims

1. A light module (10) for a motor vehicle headlight (40) for generating an overall light distribution, wherein the light module (10) comprises a first sub-module (20a) for generating a first light distribution and at least one further, second sub-module (20b) for generating a second light distribution, wherein the first and the second sub-module (20a, 20b) in each case comprise at least one semiconductor light source (22a, 22b) with a light-emitting surface for emitting light and an optical system (24a, 24b) with a primary optic (26a, 26b) for bundling at least a portion of the emitted light and a secondary optic (28, 28a, 28b) for projecting at least a portion of the bundled light in a light exit direction (12) of the light module (10), wherein the overall light distribution of the light module (10) comprises the superposition of the first light distribution and the second light distribution, and the semiconductor light source (22a) of the first sub-module (20a) in a wavelength-dependent focal point (30a) of a first wavelength of the optical system (24a) of the first sub-module (20a), so that the first sub-module (20a) is designed for the first wavelength and sharply images rays of the first wavelength, and the semiconductor light source (22b) of the second sub-module (20b) is arranged in a wavelength-dependent focal point (30b) of a second wavelength of the optical system (24b) of the second sub-module (20b), so that the second sub-module (20b) is designed for the second wavelength and sharply images rays of the second wavelength, wherein the first wavelength is different from the second wavelength, **characterized in that** a color error in the first light distribution of the first sub-module (20a) caused by rays of the second wavelength and a color error in the second light distribution caused by rays of the first wavelength are canceled out by the superposition of the first and second light distributions in the overall light distribution of the light module.

2. The light module (10) according to claim 1, **characterized in that** the first light distribution of the first sub-module (20a) and the second light distribution of the second sub-module (20b) superpose at least partially, in particular largely.

3. The light module (10) according to one of the preceding claims, **characterized in that** the semiconductor light source (22a) of the first sub-module (20a) and/or the semiconductor light source (22b) of the second sub-module (20b) comprises at least one, in particular multiple, light-emitting diodes.

4. The light module (10) according to one of the preceding claims, **characterized in that** a numerical aperture of the optical system (24a, 24b) of the first and/or second sub-module (20a, 20b) is at least 0.5, in particular at least 0.65.

5. The light module (10) according to one of the preceding claims, **characterized in that** the secondary optic (28, 28a) of the first sub-module (20a) and the secondary optic (28, 28b) of the second sub-module (20b) are designed in one piece.

6. The light module (10) according to one of the preceding claims, **characterized in that** the secondary optic (28, 28a) of the first sub-module (20a) and/or the secondary optic (28, 28b) of the second sub-module (20b) are designed as anamorphic lenses (28).

7. The light module (10) according to claim 6, **characterized in that** at least one light entry surface (36a, 36b, 36c) of the anamorphic lens (28) is designed as a cylindrical surface portion with a horizontal axis of rotation and at least one light exit surface (38) of the anamorphic lens (28) is designed as a cylindrical surface potion with a vertical axis of rotation.

8. The light module (10) according to one of the preceding claims, **characterized in that** the first sub-module (20a) and/or the second sub-module (20b) comprises an aperture (34).

9. The light module (10) according to claim 8, **characterized in that** the aperture (23) of the first sub-module (20a) and the second sub-module (20b) is designed in one piece.

10. The light module (10) according to one of the preceding claims, **characterized in that** the light module (10) comprises a third sub-module (20c) for generating a third light distribution with at least one semiconductor light source (22c) with a light-emitting surface for emitting light and an optical system (24c) with a primary optic (26c) for bundling at least a portion of the emitted light and a secondary optic (28c) for projecting at least a portion of the bundled light in a light exit direction (12) of the light module (10), wherein the overall light distribution of the light module (10) comprises a superposition of the third light distribution, wherein the semiconductor light source (22c) is arranged in a wavelength-dependent focal point (30c) of a third wavelength of the optical system (24c) of the third sub-module (20c), wherein the third wavelength is different from the first and/or the second wavelength.

11. The light module (10) according to one of the preceding claims, **characterized in that** the first wavelength is approximately 500 nm and/or the second wavelength is approximately 570 nm and/or the third wavelength is approximately 470 nm.

12. A motor vehicle headlight (40) comprising at least one light module (10), **characterized in that** the light module (10) is designed according to at least one of the claims 1 to 11.

## Revendications

1. Module d'éclairage (10) pour un phare de véhicule automobile (40) permettant de générer une distribution de lumière globale, dans lequel le module d'éclairage (10) comprend un premier sous-module (20a) permettant de générer une première distribution de lumière et au moins un autre, deuxième sous-module (20b) permettant de générer une deuxième distribution de lumière, dans lequel le premier et le deuxième sous-module (20a, 20b) comprennent respectivement au moins une source de lumière à semi-conducteur (22a, 22b) comportant une surface émettrice de lumière permettant d'émettre de la lumière et un système optique (24a, 24b) comportant une optique primaire (26a, 26b) permettant de concentrer au moins une partie de la lumière émise et une optique secondaire (28, 28a, 28b) permettant de projeter au moins une partie de la lumière concentrée dans une direction de sortie de lumière (12) du module d'éclairage (10), dans lequel la distribution de lumière globale du module d'éclairage (10) comprend la superposition de la première distribution de lumière à la deuxième distribution de lumière, et la source de lumière à semi-conducteur (22a) du premier sous-module (20a) est disposée dans un point focal (30a) dépendant de la longueur d'onde d'une première longueur d'onde du système optique (24a) du premier sous-module (20a), de sorte que le premier sous-module (20a) est configuré pour la première longueur d'onde et représente nettement des rayons de la première longueur d'onde, et la source de lumière à semi-conducteur (22b) du deuxième sous-module (20b) est disposée dans un point focal (30b) dépendant de la longueur d'onde d'une deuxième longueur d'onde du système optique (24b) du deuxième sous-module (20b), de sorte que le deuxième sous-module (20b) est configuré pour la deuxième longueur d'onde et représente nettement des rayons de la deuxième longueur d'onde, dans lequel la première longueur d'onde est différente de la deuxième longueur d'onde,
**caractérisé en ce qu'**une aberration chromatique provoquée par des rayons de la deuxième longueur d'onde dans la première distribution de lumière du premier sous-module (20a) et une aberration chromatique provoquée par des rayons de la première longueur d'onde dans la deuxième distribution de lumière sont annulées par la superposition de la première distribution de lumière à la deuxième distribution de lumière dans la distribution de lumière globale du module d'éclairage.

2. Module d'éclairage (10) selon la revendication 1, **caractérisé en ce que** la première distribution de lumière du premier sous-module (20a) et la deuxième distribution de lumière du deuxième sous-module (20b) se superposent au moins partiellement, en particulier en grande partie.

3. Module d'éclairage (10) selon l'une des revendications précédentes, **caractérisé en ce que** la source de lumière à semi-conducteur (22a) du premier sous-module (20a) et/ou la source de lumière à semi-conducteur (22b) du deuxième sous-module (20b) comprennent au moins une, en particulier plusieurs, diodes électroluminescentes.

4. Module d'éclairage (10) selon l'une des revendications précédentes, **caractérisé en ce qu'**une ouverture numérique du système optique (24a, 24b) du premier et/ou du deuxième sous-module (20a, 20b) est d'au moins 0,5, en particulier d'au moins 0,65.

5. Module d'éclairage (10) selon l'une des revendications précédentes, **caractérisé en ce que** l'optique secondaire (28, 28a) du premier sous-module (20a) et l'optique secondaire (28, 28b) du deuxième sous-module (20b) sont réalisées d'une seule pièce.

6. Module d'éclairage (10) selon l'une des revendications précédentes, **caractérisé en ce que** l'optique secondaire (28, 28a) du premier sous-module (20a) et/ou l'optique secondaire (28, 28b) du deuxième sous-module (20b) sont réalisées sous forme de lentille anamorphosante (28).

7. Module d'éclairage (10) selon la revendication 6,
**caractérisé en ce qu'**au moins une surface d'entrée de lumière (36a, 36b, 36c) de la lentille anamorphosante (28) est réalisée sous forme de section de surface cylindrique comportant un axe de rotation horizontal et au moins une surface de sortie de lumière (38) de la lentille anamorphosante (28) est réalisée sous forme de section de surface cylindrique comportant un axe de rotation vertical.

8. Module d'éclairage (10) selon l'une des revendications précédentes, **caractérisé en ce que** le premier sous-module (20a) et/ou le deuxième sous-module (20b) comprennent un écran (34).

9. Module d'éclairage (10) selon la revendication 8, **caractérisé en ce que** l'écran (23) du premier sous-module (20a) et du deuxième sous-module (20b) est réalisé d'une seule pièce.

10. Module d'éclairage (10) selon l'une des revendications précédentes, **caractérisé en ce que** le module d'éclairage (10) comprend un troisième sous-module (20c) permettant de générer une troisième distribution de lumière comportant au moins une source de lumière à semi-conducteur (22c) comportant une surface émettrice de lumière permettant d'émettre de la lumière et un système optique (24c) comportant une optique primaire (26c) permettant de concentrer au moins une partie de la lumière émise et une optique secondaire (28c) permettant de projeter au moins une partie de la lumière concentrée dans une direction de sortie de lumière (12) du module d'éclairage (10), dans lequel la distribution de lumière globale du module d'éclairage (10) comprend une superposition de la troisième distribution de lumière, dans lequel la source de lumière à semi-conducteur (22c) est disposée dans un point focal (30c) dépendant de la longueur d'onde d'une troisième longueur d'onde du système optique (24c) du troisième sous-module (20c), dans lequel la troisième longueur d'onde est différente de la première et/ou de la deuxième longueur d'onde.

11. Module d'éclairage (10) selon l'une des revendications précédentes, **caractérisé en ce que** la première longueur d'onde est d'environ 500 nm et/ou la deuxième longueur d'onde est d'environ 570 nm et/ou la troisième longueur d'onde est d'environ 470 nm.

12. Phare de véhicule automobile (40) comprenant au moins un module d'éclairage (10), **caractérisé en ce que** le module d'éclairage (10) est réalisé selon au moins l'une des revendications 1 à 11.
